Europäisches Patentamt

European Patent Office

Office européen des brevets

(19)

(11) Veröffentlichungsnummer: **0 088 928**
A2

# EUROPÄISCHE PATENTANMELDUNG

(12)

(21) Anmeldenummer: 83101925.2

(22) Anmeldetag: 28.02.83

(51) Int. Cl.³: **B 05 B 11/00**
F 16 J 3/06, F 04 B 9/14
A 61 M 5/315, A 01 M 7/00

(30) Priorität: 12.03.82 DE 3208954

(43) Veröffentlichungstag der Anmeldung:
21.09.83 Patentblatt 83/38

(84) Benannte Vertragsstaaten:
BE DE FR GB IT NL SE

(71) Anmelder: BAYER AG
Zentralbereich Patente, Marken und Lizenzen
D-5090 Leverkusen 1, Bayerwerk(DE)

(72) Erfinder: Bayer, Michael, Ing. grad.
Hainbuchenweg 6
D-5000 Köln 91(DE)

(72) Erfinder: Sachs, Hermann, Dr.
Höhenstrasse 94
D-5090 Leverkusen 3(DE)

(54) **Dosierpistole.**

(57) Die Dosierpistole beruht auf einer manuell betätigten Verdrängerpumpe mit einem zylindrischen Gehäuse (1), einem Produktraum (2) und einer Schubstange (3) mit dem Handgriff (5). Durch Zug am Handgriff (5) wird die im Produktraum (2) befindliche Flüssigkeitsmenge verdrängt und tritt durch die zentrale Bohrung (19) in der Schubstange (3) nach vorne aus. Der Produktraum (2) ist mittels einer trichterförmigen, gegen Medikamente und Lösungsmittel beständigen Gummimembran (10) gegenüber dem Gehäuse (1) abgedichtet. An dem Ein- und Ausgang des Produktraumes sind Rückschlagventile (22,20) angeordnet. Die Abdichtung des Produktraumes (2) mittels der trichterförmigen Membran (10) gewährleistet, daß die Dosierpumpe absolut dicht ist, so daß keine Flüssigkeit nach außen treten kann. Außerdem wird durch diese Konstruktion eine hohe Lebensdauer erreicht.

EP 0 088 928 A2

BAYER AKTIENGESELLSCHAFT      5090 Leverkusen, Bayerwerk

Zentralbereich
Patente, Marken und Lizenzen   Ki/bc/c

Dosierpistole

Die Erfindung betrifft eine Dosierpistole für Anwendungen im veterinärmedizinischen, landwirtschaftlichen, botanischen oder technischen Bereich. Sie wird manuell betätigt und ist zu diesem Zweck mit einem Schubstangengriff und einem Zylinderhandgriff versehen, die beim Dosieren gegen die Federspannung einer im Produktraum befindlichen Druckfeder aufeinander zubewegt werden.

Auf einer Kolbenpumpe beruhende Dosierpistolen sind für ähnliche Anwendungen in den US-Patenten 3 474 938 und 4 185 755 beschrieben. Sie haben den Nachteil, daß nach längerem Gebrauch der Kolben aufgrund von verkrusteten Produktrückständen manchmal klemmt und dadurch die Betriebssicherheit beeinträchtigt wird. Außerdem kann aufgrund einer verschieden starken Quellung von Kolben und Zylinder eine Vergrößerung des Kolbenspaltes auftreten, was dazu führt, daß der Kolben nicht mehr genügend abgedichtet ist und beim Dosiervorgang Flüssigkeit in den rückwärtigen Kolbenraum und von dort nach draußen gelangen kann. Damit ist aber die Dichtheit der Dosierkolbenpistole nicht mehr gewährleistet. Der Benutzer

Le A 21 602

kommt dann direkt mit dem Produkt in Berührung, was eigentlich ausgeschlossen werden sollte.

Hier setzt die Erfindung an. Die Aufgabe besteht darin, ausgehend von den bekannten Dosierpumpen eine Lösung zu finden, die auf der einen Seite hinsichtlich des Kolbenspiels unkritisch ist (hohe Betriebssicherheit) und auf der anderen Seite kein Produkt nach außen treten läßt.

Diese Aufgabe wird erfindungsgemäß dadurch gelöst, daß der Produktraum mittels einer trichterförmigen, gegen Medikamente und Lösungsmittel beständigen und an der Schubstange befestigten Gummimembran gegenüber dem Gehäuse abgedichtet ist.

Vorteilhaft ist die Gummimembran mittels eines Ringwulstes in einer entsprechenden Ringnut am Gehäuse befestigt.

Eine Weiterentwicklung besteht darin, daß sich die Gummimembran rückseitig an einem konischen Membranhalter abstützt. Auf diese Weise erreicht man, daß die Gummimembran bei Betätigung der Schubstange gleichmäßig verformt wird und eine mechanische Überbeanspruchung an wenigen Stellen vermieden wird.

Die neue Dosierkolbenpistole hat sich in der Praxis bestens bewährt, ist leicht zu handhaben und arbeitet auch über einen langen Zeitraum völlig einwandfrei.

Le A 21 602

Ein Austreten von Flüssigkeit am Gehäuse konnte nicht mehr beobachtet werden.

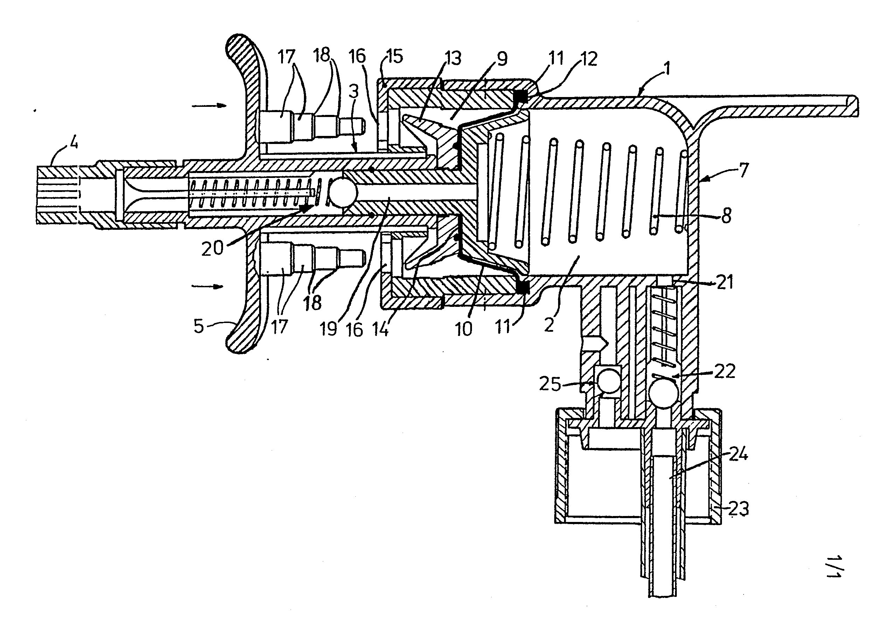

Im folgenden wird ein Ausführungsbeispiel der Erfindung anhand einer Zeichnung näher beschrieben. In der Figur ist die neue Dosierpistole im Längsschnitt gezeigt. Ihre wesentlichen Bestandteile sind das zylindrische Gehäuse 1 mit dem Produktraum 2, Schubstange 3 und das Mundstück 4 mit dem Handgriff 5. Die Schubstange 3 ist starr mit dem Mundstück 4 verbunden und kann durch Zug am Handgriff 5 in axialer Richtung verschoben werden. Zu diesem Zweck nimmt man die Dosierpistole so in die Hand, daß sich die Handfläche an dem Zylinderhandgriff 7 abstützt, während die Finger über den Schubstangengriff 5 greifen. Die Druckfeder 8 im Kolbenraum bewirkt, daß die Schubstange 3 nach dem Dosiervorgang wieder in ihre Ausgangslage zurückgeht.

Zur Abdichtung des Produktraumes 2 ist eine Gummimembran 10 vorgesehen, die zwischen der Schubstange 3 und dem Gehäuse 1 angeordnet ist und am Gehäuse mittels eines Ringwulstes 11 in einer Nut 12 befestigt ist. Die Gummimembran 10 hat einen trichterförmigen Querschnitt und stützt sich rückseitig an einem konischen Membranhalter 13 ab, der zentrisch an der Schubstange 3 angeordnet ist. Die Gummimembran 10 ist an der Stirnfläche 14 des Membranhalters 10 befestigt und dichtet die Schubstange 3 gegenüber dem Produktraum 2 ab.

Die Dosierpistole ist mit einer Dosiervorrichtung versehen, die auf einer stufenförmigen Begrenzung des

Le A 21 602

Kolbenhubs beruht und auf diese Weise eine reproduzierbare Einstellung der dosierten Menge ermöglicht. Sie besteht einerseits aus einer um die Längsachse drehbaren Dosierscheibe 15 an der Stirnseite des Gehäuses 1, in der Aussparungen 16 mit unterschiedlichem Durchmesser vorhanden sind und andererseits aus korrespondierenden, in ihrem Durchmesser stufenförmig zunehmenden Zapfen 17 am Schubstangengriff 5. Die Durchmesserabstufung des Zapfens 17 ist so gewählt, daß bei einer bestimmten Einstellung des Dosierrades 15 z.B. die ersten beiden Zapfen 17 gerade noch durch die Öffnung 16 passen, während sich das daran angrenzende Zapfenstück mit nächsthöherem Durchmesser nicht mehr durch die Öffnung 16 schieben läßt.

Die Hubbegrenzung kommt also dadurch zustande, daß die Anschlagflächen 18 zwischen den Zapfen 17 an die Stirnseite der Dosierscheibe 15 anstoßen.

Um zu verhindern, daß sich der Kolbenhandgriff 5 mit den Dosierzapfen 17 um die Längsachse drehen kann, ist die Schubstange 3 in bekannter Weise mit einer Nut-Nocken-Führung versehen. Dadurch wird gewährleistet, daß die Dosierzapfen 17 immer jeweils mit der vorgewählten Aussparung 16 fluchten.

In der Schubstange 3 befindet sich eine zentrale Bohrung 19, die das Mundstück mit dem Produktraum 2 verbindet. Außerdem ist ein Kugelventil 20 eingebaut, daß ein Ansaugen von Luft durch das Mundstück 4 verhindert (Auslaßventil). Auf der anderen Seite ist der

Le A 21 602

- 5 -

0088928

Produktraum 2 über die Öffnung 21 mit einem Ansaugrohr 24 verbunden, in dem das Rückschlagventil 22 eingebaut ist (Einlaßventil). Mit der Schraubkappe 23 kann die Dosierpistole auf eine Vorratsflasche aufgesetzt werden, wobei das Rohr 24 in die Flüssigkeit eintaucht. Der Druckausgleich in der Vorratsflasche erfolgt dabei über das Luftdruckventil 25 im unteren Teil des Gehäuses 1.

Zur Applikation einer Lösung oder Suspension wird die Dosierpistole mittels des Schraubverschlusses 23 auf die Vorratsflasche aufgesetzt. Sodann wird die gewünschte Dosiermenge, z.B. 1 bis 10 ml, durch Drehen der Dosierscheibe 15 eingestellt. Die Applikation erfolgt dann wie schon beschrieben durch Ziehen des Handgriffs 5 in Pfeilrichtung. Dabei schließt sich das Einlaßventil 22. Die im Produktraum 2 befindliche Flüssigkeitsmenge wird aufgrund der Deformation der Gummimembran 10 verdrängt und tritt durch die zentrale Bohrung 19 in der Schubstange 3 und das Mundstück 4 bei geöffnetem Auslaßventil 20 nach vorne aus. Beim Loslassen des Schubstangengriffs 5 bewegt sich die Gummimembran 10 in ihre Ausgangslage zurück, wobei sich das Einlaßventil 22 öffnet und durch das Rohr 24 soviel Flüssigkeit angesaugt wird, bis der Produktraum 2 wieder vollständig gefüllt ist. Die Dosierpistole ist damit für den nächsten Dosiervorgang bereit.

Die Vorteile der neuen Dosierpistole liegen vor allem in der einfachen Handhabung, der absoluten Dichtheit gegenüber dem Austritt von Flüssigkeit, der hohen Betriebssicherheit und der fertigungstechnisch optimierten Konstruktion, die eine preisgünstige Herstellung mit Hilfe der Spritzgußtechnik erlaubt.

Le A 21 602

0088928

- 6 -

<u>Patentansprüche</u>

1) Dosierpistole für Anwendungen im veterinärmedizinischen, landwirtschaftlichen, botanischen oder technischen Bereich mit einem Schubstangengriff (5) und einem Zylinderhandgriff (7), die beim Dosieren gegen die Federspannung einer im Produktraum (2) befindlichen Druckfeder (8) aufeinander zubewegt werden, dadurch gekennzeichnet, daß der Produktraum (2) mittels einer trichterförmigen, gegen Medikamente und Lösungsmittel beständigen Gummimembran (10), gegenüber dem Gehäuse (1) abgedichtet ist.

2) Dosierkolbenpistole nach Anspruch 1, dadurch gekennzeichnet, daß die Gummimembran (10) mittels eines Ringwulstes (11) in einer entsprechenden Ringnut (12) am Gehäuse (1) befestigt ist.

3) Dosierpistole nach Ansprüchen 1 bis 2, dadurch gekennzeichnet, daß sich die Gummimembran (10) rückseitig an einem konischen Membranhalter (13) abstützt.

<u>Le A 21 602</u>

0088928

1/1